(19) Europäisches Patentamt
European Patent Office
Office européen des brevets

(11) **EP 1 641 270 A1**

(12) **EUROPEAN PATENT APPLICATION**
published in accordance with Art. 158(3) EPC

(43) Date of publication:
**29.03.2006 Bulletin 2006/13**

(51) Int Cl.:
*H04N 7/24* (1995.01)    *H04N 1/41* (1980.01)

(21) Application number: **04746929.1**

(22) Date of filing: **28.06.2004**

(86) International application number:
**PCT/JP2004/009460**

(87) International publication number:
**WO 2005/004489 (13.01.2005 Gazette 2005/02)**

(84) Designated Contracting States:
**DE FR GB**

(30) Priority: **02.07.2003 JP 2003190264**

(71) Applicant: **SONY CORPORATION**
**Tokyo 141-0001 (JP)**

(72) Inventors:
• **Kobayashi, Masaya,**
**c/o Sony Corporation**
**Tokyo 141-0001 (JP)**

• **Michishita, Kenya,**
**c/o Sony Corporation**
**Tokyo 141-0001 (JP)**

(74) Representative: **Thévenet, Jean-Bruno et al**
**Cabinet Beau de Loménie**
**158, rue de l'Université**
**75340 Paris Cédex 07 (FR)**

(54) **BLOCK DISTORTION DETECTION DEVICE, BLOCK DISTORTION DETECTION METHOD, AND VIDEO SIGNAL PROCESSING DEVICE**

(57) An edge is detected by inputting a video luminance signal and based on a luminance signal difference. The detected edge is composed by the number in accordance with the number of pixels included in a block and counted by a plurality of counters corresponding to a horizontal position of an image. Values of respective counters are evaluated to identify a block boundary position. By performing filtering processing on the pixel signal at the identified block boundary position, a block distortion is reduced.

# FIG. 1

**Description**

TECHNICAL FIELD

The present invention relates to a block distortion detection apparatus and a block distortion detection method for detecting a block distortion in an analogue video signal caused by block encoding of an image, and a video signal processing apparatus.

BACKGROUND ART

Conventionally, as an encoding method for effectively performing compression encoding on still image data and motion data, block DCT (discrete cosine transformation) encoding and other block encoding are known.

At the time of compression/decompression by such block encoding, a block distortion (block noise) may arise and the noise arises easier as the compression rate becomes high. The block distortion is an error of a reproduction data value at a boundary with an adjacent block recognized as noise because transformation is performed in a closed space in the DCT encoding, etc. and continuity declines at the block boundary.

When data including the block distortion is converted to analogue data after that, it becomes harder to reduce the block distortion because there is no means for obtaining information on a location of the block boundary.

Conventionally, to solve the problem, for example, the Japanese Unexamined Patent Publication No. 2000-350202 (pp. 3 to 4, FIG. 1 and FIG. 2) proposes a technique of determining existence of a block distortion by outputting a differential signal based on an input luminance signal, detecting an isolated differential point from the differential signal, performing integration processing on the isolated differential point in accordance with a pixel block cycle, and cumulatively adding information on isolated differential points generated at the pixel block cycle.

In this method, however, block boundaries cannot be accurately discriminated from changes of a luminance signal in a scene with a greatly changing luminance signal. For example, an existence of a block distortion may be erroneously determined by detecting an isolated differential point in an image including much high frequency components, an image of a column, etc. and a pulsing noise, etc. and cumulatively adding the detected isolated differential points.

Accordingly, when performing video signal processing based on the erroneously determined block boundaries, there is a problem that the image quality deteriorates.

DISCLOSURE OF THE INVENTION

An object of the present invention is to provide a highly accurate block distortion detection apparatus, a video signal processing apparatus and a block distortion detection method with minimum erroneous detection in a video signal, wherein information on block boundaries is lost.

To attain the above object, according to a first aspect of the present invention is a block distortion detection apparatus for detecting a block distortion occurred during block encoding of an image, comprising: an edge detection means for detecting an existence of an edge in each of a plurality of pixel signals based on differences of each of successive pixel signals; an edge count means including a plurality of counters, a number of which is determined in response to a number of pixels included in a block, for successively accepting and counting edge detection results of the edge detection means respectively by the plurality of counters at first timing, which is synchronized with a horizontal synchronization signal; and a block boundary identification means for successively retrieving counter values of the plurality of counters at second timing, which is synchronized with a vertical synchronization signal, and for identifying a block boundary based on the counter values of the counters and an order of retrieving the edge detection results by the respective counters.

Also, to attain the above object, a second aspect of the present invention is a block distortion detection method for detecting a block distortion due to block encoding of an image, including the steps of detecting an existence of an edge in each of a plurality of pixel signals based on differences of the plurality of successive pixel signals; successively retrieving edge detection results of the edge determination means respectively by a plurality of counters in accordance with the number of pixels included in a block at first timing in synchronization with a horizontal synchronization signal and counting; and successively retrieving counter values of the plurality of counters at second timing in synchronization with a vertical synchronization signal and identifying as a block boundary based on an order of retrieving the edge detection results by the counters and a counter value of the counters.

Also, to attain the above object, a third aspect of the present invention is a block distortion detection method for detecting a block distortion due to block encoding of an image, comprising an edge detection means for detecting an existence of an edge in each of a plurality of pixel signals based on differences of the plurality of successive pixel signals; an edge count means including a plurality of counters in accordance with the number of pixels included in a block, for successively retrieving edge detection results of the edge determination means respectively by the plurality of counters at first timing in synchronization with a horizontal synchronization signal and counting; a block boundary identification means for successively retrieving counter values of the plurality of counters at second timing in synchronization with a vertical synchronization signal and identifying as a block boundary based on an order of retrieving the edge detection results by the counters and a counter value of the counters; and a filtering means for performing filtering processing on the pixel signals at the block boundary position specified by the block boundary identification means.

According to the block distortion detection apparatus according to the first aspect of the present invention, the edge detection means detects an existence of an edge in each of a plurality of pixel signals based on differences of the plurality of successive pixel signals. The edge count means includes a plurality of counters in accordance with the number of pixels included in a block, successively retrieves edge detection results of the edge determination means respectively by the plurality of counters at first timing in synchronization with a horizontal synchronization signal and counts. The block boundary identification means successively retrieves counter values of the plurality of counters at second timing in synchronization with a vertical synchronization signal and identifies as a block boundary based on an order of retrieving the edge detection results by the counters and a counter value of the counters.

Since the plurality of counters correspond respectively to horizontal positions on a screen, it is possible to quantitatively detect a horizontal position where a block distortion arises in accordance with counter values of the plurality of counters.

BRIEF DESCRIPTION OF DRAWINGS

FIG. 1 is a block diagram of a block distortion detection apparatus according to a first embodiment.
FIG. 2 is a view of a circuit diagram of an edge detection circuit 2.
FIG. 3 is a view of a circuit diagram of an edge count circuit 3 and a boundary determination circuit 4.
FIG. 4 is a view for explaining edge determination processing in an edge determination circuit 24.
FIG. 5 is a view for explaining edge determination processing in an edge determination circuit 24.
FIG. 6 is a view for explaining edge determination processing in an edge determination circuit 24.
FIG. 7A to FIG.7C are timing charts for explaining an operation of a horizontal position setting counter 31.
FIG. 8A to FIG. 8D are timing charts for explaining operations of edge counters 34_1 to 34_16.
FIG. 9 is a block diagram of a video signal processing apparatus according to a second embodiment.
FIG. 10 is a block diagram of a video signal processing apparatus according to a third embodiment.

BEST MODE FOR CARRYING OUT THE INVENTION

First Embodiment

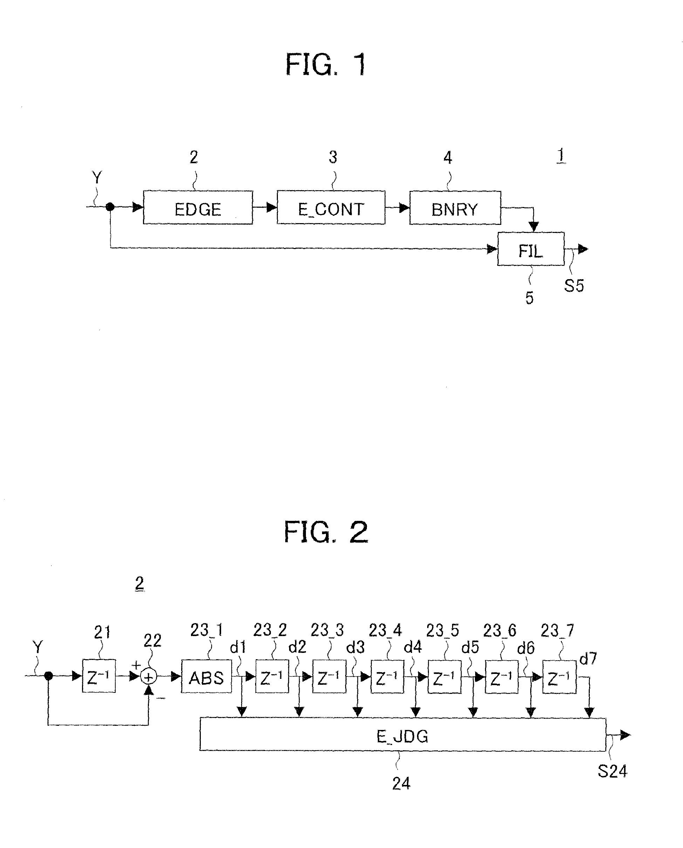

FIG. 1 is a block diagram of a block distortion detection apparatus 1 according to an embodiment of the present invention. As shown in FIG. 1, the block distortion detection apparatus 1 includes an edge detection circuit (EDGE) 2, an edge count circuit (E_CNT) 3, a boundary determination circuit (BNRY) 4 and a filter (FIL) 5.

Note that the edge detection circuit 2, the edge count circuit 3 and the boundary determination circuit 4 are an embodiment of the edge detection means, the edge count means and the boundary determination means of the present invention, respectively.

The edge detection circuit 2 receives as an input a luminance signal Y and performs edge detection of the luminance signal Y based on a predetermined condition.

The edge count circuit 3 includes a plurality of counters and is configured that designated counter is switched for each pixel. The counter counts in order in accordance with an existence of an edge detected by the edge detection circuit 2.

The boundary determination circuit 4 rearranges values of the counters cumulated in the edge count circuit 3 in synchronization with a vertical synchronization signal, evaluates the same based on a predetermined condition and determines block boundaries.

When a boundary position of a block is determined in the boundary determination circuit 4, the filter 5 performs filtering processing on the luminance signal Y at the position. As shown in FIG. 1, a signal S5 after the filtering processing is a video signal with reduced block distortion.

Below, respective components of the block distortion detection apparatus 1 will be explained in detail.

FIG. 2 is a block diagram of the edge detection circuit 2. As shown in FIG. 2, the edge detection circuit 2 is composed of a delay circuit 21, a computing unit 22, a computing unit 23_1, a plurality of delay circuits 23_2 to 23_7 and an edge determination circuit 24.

The delay circuit 21 gives a delay in an amount of one pixel sampling time to the input luminance signal Y.

Therefore, a previous value of the luminance signal Y in the sampling in units of retrieved each pixels is held in the delay circuit 21.

The computing unit 22 calculates a difference of the previous value of the luminance signal T held in the delay circuit 21 and a present value of the currently input luminance signal Y.

The computing unit 23_1 calculates an absolute value of the difference calculation of the previous value and present value of the luminance signal Y obtained in the computing unit 22. In FIG. 2, an output value of the computing unit 23_1 becomes d1.

The delay circuits 23_2 to 23_7 give delay in an amount of one pixel sampling time, respectively. Therefore, the delay circuits 23_2 to 23_7 hold absolute values of differences of adjacent luminance signals Y respectively for input eight luminance signals Y in series. In FIG. 2, output values of the delay circuits 23_2 to 23_7 become d2 to d7, respectively.

The edge determination circuit (E_JDG) 24 evaluates whether each pixel satisfies a later explained predetermined condition based on the output values d1 to d7 of the computing unit 23_1 to 23_7 and detects an existence of an edge. When an edge is detected, "1" is output, while when an edge is not detected, "0" is output.

Next, configurations of the edge count circuit 3 and the boundary determination circuit 4 will be explained.

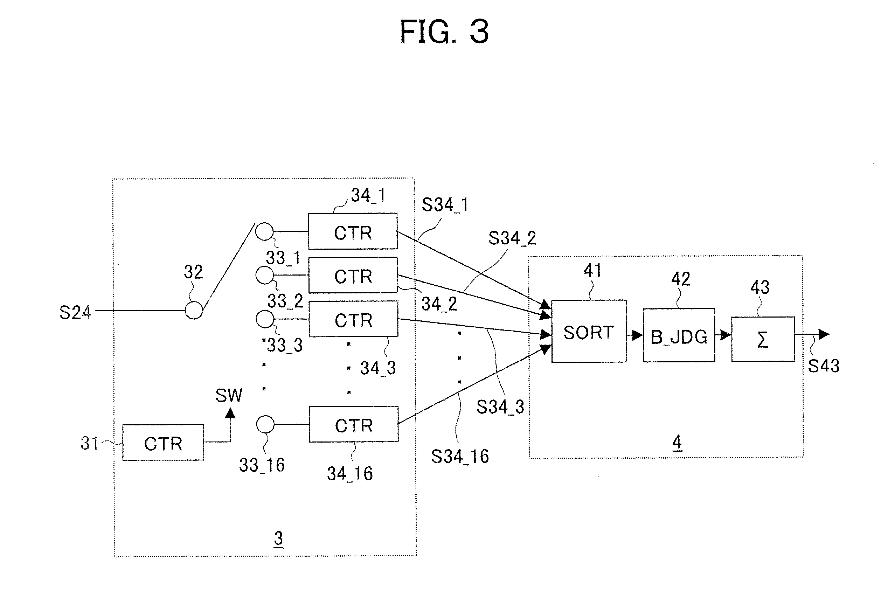

FIG. 3 is a block diagram of the edge count circuit 3 and the boundary determination circuit 4. As shown in FIG. 3, the edge count circuit 3 includes a vertical position setting counter (CTR) 31, a counter switch 32, sixteen counter contacts 33_1 to 33_16 and sixteen edge time counters (CTR) 34_1 to 34_16.

The vertical position setting counter 31 is, for example, a four-bit counter and counts up in accordance with a sampling clock of the pixel and is reset at timing in synchronization with a vertical synchronization signal of the image.

The counter switch 32 switches the counter contacts 33_1 to 33_16 in accordance with the horizontal position setting counter 31.

The edge time counters 34_1 to 34_16 are connected respectively to the counter contacts 33_1 to 33_16, and count an output signal 24S (1: an edge exists, 0: no edge) of the edge determination circuit 24 through the counters 33_1 to 33_16 set by the counter switch 32. Also, the counter values are reset at timing in synchronization with a vertical synchronization signal of the image.

Next, the configuration of the boundary determination circuit 4 shown in FIG. 3 will be explained. As explained in FIG. 3, boundary determination circuit 4 includes a counter value sort unit (SORT) 41, a block boundary determination unit (B_JDG) 42 and a time integration unit (E) 43.

The counter value sort unit 41 is a register a register for holding counter values of the edge time counters 34_1 to 34_16 of the edge count circuit 3, respectively, and as shown in FIG. 3, retrieves the respective counter values of the edge time counters 34_1 to 34_16 at timing in synchronization with a vertical synchronization signal of the image. Furthermore, the counter value sort unit 41 rearranges the retrieved respective counter values of the edge time counters 34_1 to 34_16 in an ascending order.

The block boundary determination unit 42 evaluates the counter values of the counter values of the edge time counters 34_1 to 34_16 rearranged in an ascending order in the counter value sort unit 41 based on a predetermined condition and determines a block boundary.

The time integration unit 43 performs time integration between fields of a predetermined image for the determination result of the block boundary determination unit 42, determines a block boundary position from the result and outputs existence of a block boundary and position information of the block boundary.

The respective components of the block distortion detection apparatus 1 were explained above.

Next, operations of the block distortion detection apparatus 1 including the above components as above will be explained in detail.

First, a video luminance signal Y is input to the delay circuit 21. The delay circuit 21 gives a delay corresponding to an amount of one pixel sampling to the input luminance signal Y and holds the data. Namely, the delay circuit 21 holds a previous value Y(n-1) of the previously input luminance signal.

Calculation of a difference of the currently input luminance signal Y(n) for each pixel and the previous value Y(n-1) held in the delay circuit 21 in the computing unit 22, and Y(n) - Y(n-1) is obtained.

In the computing unit 23_1, calculation of an absolute value of the difference calculation value Y(n) - Y(n-1) obtained in the computing unit 22 is performed to obtain |Y(n) - Y(n-1)|. Therefore, d1 = |Y(n) - Y(n-1)| here.

In the delay circuit 23_2, a delay corresponding to an amount of one pixel sampling time to the absolution value |Y(n) - Y(n-1)| obtained in the computing unit 23_1 and outputs to the delay circuit 23_3. Accordingly, d2 = |Y(n) - Y(n-1)| stands. At the same time, in the computing unit 23_1, d1 = |Y(n+1) - Y(n)| is obtained from Y(n) and the next luminous signal Y(n+1).

Each of the delay circuits 23_3 to delay circuit 23_7 is set an output value of the previous delay circuit, gives a delay corresponding to an amount of one-time pixel sampling and outputs in the same way as the delay circuit 23_2 does, so that an absolute value of a difference of adjacent luminance signals for each pixel is successively set to the delay circuits 23_3 to delay circuit 23 7 and output.

Note that it is obvious that the plurality of delay circuits explained above operate in synchronization with a pixel sampling clock.

The edge determination circuit 24 determines for each pixel existence of an edge of the luminance signals on the output values d1 to d7 of the computing units 23_1 to 23_7 operating as above.

Here, even if the difference absolute value of the luminance signal is a large value, it is necessary to prevent erroneous detection in the case of changes of luminance due to a video signal itself, such as a vertical line image of a column, etc., or one pulsing noise.

In FIG. 2, d4 is a luminance difference value (hereinafter, indicates an absolute value) for the edge determination and existence of an edge of the designated luminance difference value d4 is evaluated also in consideration of the previous and subsequent three values d1 to d3 and d5 to d7.

Here, by considering the points below, highly accurate detection of a block boundary becomes possible.

(1) In an image with greatly changing luminance, changes of the luminance may be erroneously determined as a block boundary, so that it is more accurate to detect a block boundary in the case of a luminance signal in a flat image, wherein luminance changes a little.

(2) Change of a level of block distortion is within a certain range, so that erroneous determination with pulsing noise can be prevented by setting an upper limit of luminance changes.

Accordingly, the edge determination is performed by the three conditions below in the edge determination circuit 24.
Condition 1: There is not a large luminance signal difference value around a focused luminance signal difference value.

$$\text{(Threshold A} > d1) \& (\text{Threshold A} > d2) \& (\text{Threshold A} > d3) \& (\text{Threshold A} > d5) \& (\text{Threshold A} > d6) \& (\text{Threshold A} > d7)$$

Condition 2: The focused luminance signal difference value is larger than an average of the surrounding luminance signal difference value at least by a multiple of 6/coefficient A.

$$d4 > (d1+d2+d3+d5+d6+d7)/6 \times (6/\text{coefficient A})$$

thus,

$$d4 > (d1+d2+d3+d5+d6+d7)/\text{coefficient A}$$

(3) Condition 3: The focused luminance signal difference value is within a specific range.

$$\text{Threshold B} > d4 > \text{Threshold C}$$

Here, for example, values of A=16, B=40 and C=8 are applied to 10-bit luminance signal input.

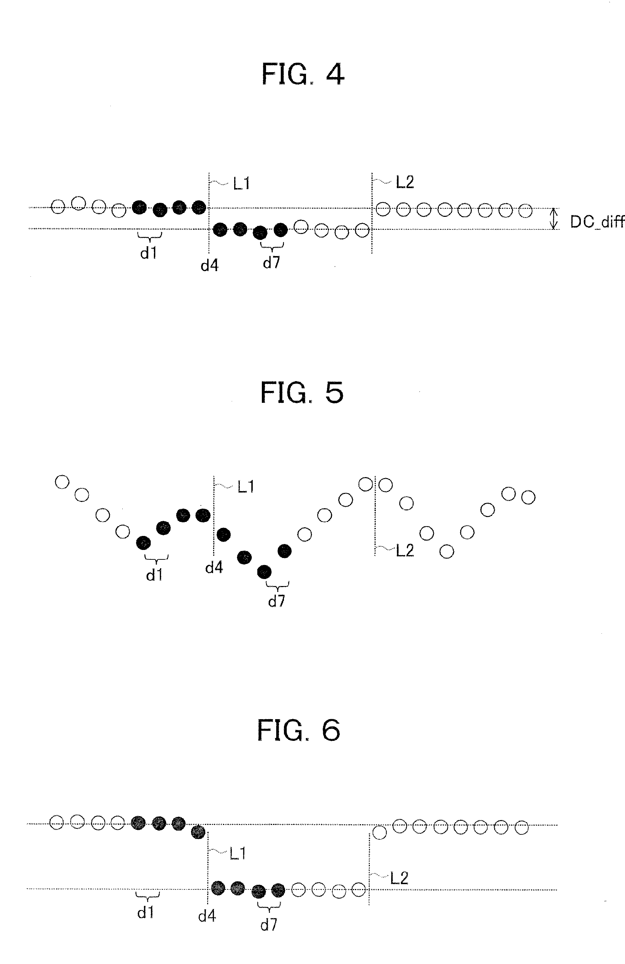

Based on the above three conditions, how an actual luminance signal is evaluated by the edge determination circuit 24 will be explained below by using FIG. 4 to FIG. 6.

FIG. 4 is an example of an image pattern, wherein a block distortion is visually conspicuous

FIG. 5 is an example of an image pattern, wherein block distortion is not visually notable.

FIG. 6 is an example of an image pattern, wherein not a block distortion but a vertical line exists in every 8 pixels.

In FIG. 4 to FIG. 6, those indicated by a white circle and black circle are data of a luminance signal for each pixel and retrieved by the edge detection circuit 2, respectively. Here, seven difference values of adjacent luminance signals of eight black circles are set to the computing unit 23_1 and the delay circuits 23_2 to 23_7.

Also, in FIG. 4 to FIG. 6, a difference of adjacent luminance signals is large in a portion sectionalized by lines L1 and L2. The part sectionalized by the line L1 is a currently focused luminance signal difference d1, and an existence of an edge at this part is evaluated based on seven luminance signal difference values including the previous and subsequent values.

In the image pattern in FIG. 4, a high frequency part of the luminance signal is a little, a low frequency part accounts for a large part, and the block distortion is easily seen visually; so that it is an image pattern wherein an edge by the block distortion should be detected. In FIG. 4, a part indicated as DC_diff is a part to be a block distortion visually. In such an image pattern, it is unlikely to erroneously detect a block distortion, so that the above conditions 1 to 3 are set to perform edge detection caused by the block distortion.

Namely, since the luminous signal is a low frequency as a whole, luminance signal difference values other than the focused d4 are small and the condition 1 is satisfied. Also, an average value of the surrounding luminance signal difference values except for d4 is also small, so that it is considered to satisfy the condition 2.

If the d4 is not generated by a pulsing noise, it becomes a value in a predetermined range, so that the condition 3 is satisfied, so that an edge is detected at the d4 part in the image pattern in FIG. 4.

The image pattern in FIG. 5, the luminance signal has high frequency components, so that it is an image pattern, wherein the block distortion is not visually notable. In the image pattern as shown in FIG. 5, a block distortion itself is not notable and changes of the luminance signal as a pattern of the image may be erroneously determined as a block distortion. The above conditions 1 to 3 are set so as not to perform edge detection in such a case.

Namely, any one of the luminance signal difference values d1 to d3 and d5 to d7 becomes larger than a predetermined threshold A, so that the condition 1 is not satisfied. Also, luminance signal difference values d1 to d3 and d5 to d7 around them becomes relatively large values, so that the average value also becomes large and the condition 2 may not be satisfied. If d4 is not caused by a pulsing noise, it becomes a value within a predetermined range and the condition 3 is satisfied.

Accordingly, edge detection is not performed at the d4 part in the image pattern in FIG. 5.

The image pattern in FIG. 6 has vertical lines existing in every 8 pixels in the luminance signal. Since the luminance signal difference value generated by the block distortion normally falls in a certain range, as shown in the image pattern in FIG. 6, the conditions 1 to 3 are set so that the edge detection is not performed when d4 is a large luminance signal difference value exceeding the certain range.

Namely, the luminance signal difference values d1 to d3 and d5 to d7 around d4 become not larger than the predetermined threshold A and satisfy the condition 1, and an average value of luminance signal difference values d1 to d3 and d5 to d7 around them also become small, so that the condition 2 is satisfied. However, in the condition 3, d4 exceeds a level of expected block distortion, so that the edge detection is not performed at the d4 part in the image pattern in FIG. 6.

As explained with reference to FIG. 4 to FIG. 6 above, by setting the above conditions 1 to 3, the edge detection is not performed on an image pattern having a luminance signal having much high frequency components and an image including a vertical line or a pulsing noise, and the edge detection is performed only on a luminance signal, wherein high frequency components are a little and a block boundary is easily recognized, so that erroneous determination of the block boundary position can be reduced.

Naturally, it is possible to reduce erroneous determination of the block boundary position to a certain extent even when not all of the conditions 1 to 3 are set.

For example, when applying only the conditions 1 and 2, erroneous determination may be made when the luminance signal includes a pulsing noise, but edge detection can be performed on a stable luminance signal not including high frequency components. Also, there is an advantage that erroneous determination at least on a pulsing noise is not caused when the condition 3 alone is applied.

The edge determination circuit 24 outputs as a signal S24 as the edge determination result in FIG. 2 "1" only when all of the conditions 1 to 3 above are matched and outputs "0" in other cases.

Note that optimal values of the threshold A, threshold B, threshold C and coefficient A vary more or less depending on the configuration of a system on the previous stage of the block distortion detection apparatus 1, so that it is preferable that they can be set from the outside.

Next, a circuit operation of the edge count circuit 3 will be explained by using FIG. 3.

First, the output signal S24 (edge exists: "1", no edge exists: "0") as the edge determination result is successively input in units of pixel sampling from the edge determination circuit 24 in the edge detection circuit 2 to the edge count circuit 3.

The horizontal position setting counter 31 counts up in units of pixels and the counter switch 32 switches connection positions of contacts successively, such as the counter contact 33_1 → counter contact 33_2 → ..., in accordance therewith. The horizontal position setting counter 31 is reset at timing in synchronization with a video horizontal synchronization signal, so that the output signal S24 ("1" or "0") as the edge determination result is counted successively by the edge time counters 34_1 to 34_16 by following the video horizontal position.

Counter values of the edge time counters 34_1 to 34_16 are reset at timing in synchronization with a video vertical synchronization signal, so that the above operation is performed for every field of an image.

Note that, as will be explained later on, a counter value immediately before resetting the counter value at timing in synchronization with the video vertical synchronization signal is retrieved by the boundary determination circuit 4 in an order that the edge time counter 34_1 to 34_16 retrieve the signal S24.

Here, the reason why the edge time counter is composed not by the number of 8 as an pixel interval to normally generate a block distortion but by the number of 16 as a multiple of 8 is that the possibility of erroneous detection is prevented by incidentally increasing only one counter value when a vertical line, such as a column, on a screen, so that performance of the block boundary detection is improved.

A method of evaluating the erroneous detection prevention performed in the boundary determination circuit 4 will be explained later on.

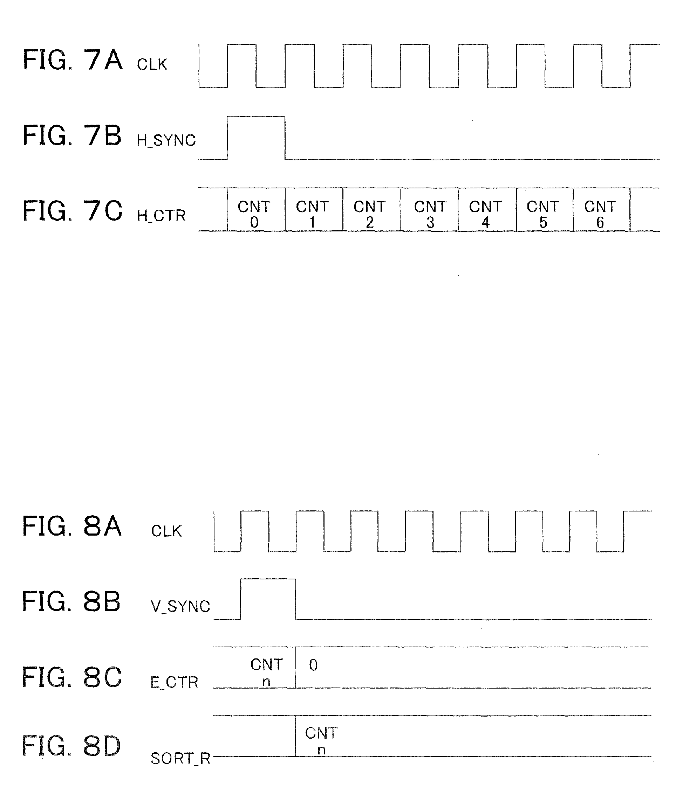

FIG. 7A to FIG. 7 C are timing charts for explaining an operation of the horizontal position setting counter 31. In FIGS. 7, FIG. 7 A indicates a sampling clock CLK of pixels, FIG. 7 B indicates a horizontal synchronization signal H_SYNC of an image, and FIG. 7C indicates a counter value H_CTR of the horizontal position setting counter 31.

As shown in FIGS. 7, the counter value H_CTR of the horizontal position setting counter 31 is counted up in synchronization with the sampling clock CLK of an image, and the counter value H_CTR is reset at timing in synchronization with the horizontal synchronization signal H_SYNC of the image. Accordingly, by resetting the counter value H CTR of the horizontal position setting counter 31 at timing in synchronization with the horizontal synchronization signal H_SYNC of the image, it is determined to which counter in the edge time counters 34_1 to 34_16 the signal S24 ("1" or "0") as the edge detection result is retrieved in accordance with a position of the screen.

As explained above, edge detection results are count up in a counter group of the edge time counters 34_1 to 34_16 successively in units of pixel.

FIG. 8A to FIG. 8D are timing charts for explaining operations of edge counters 34_1 to 34_16 performed at timing in synchronization with the vertical synchronization signal of the image. In FIGS. 8, FIG. 8A shows a sampling clock CLK, FIG. 8B shows a vertical synchronization signal V_SYNC, FIG. 8C shows a counter values E_CTR of the edge time counters 34_1 to 34_16, and FIG. 8D shows a register value SORT_R of the counter value sort portion 41 in the boundary determination circuit 4, which will be explained later on.

In FIGS. 8, in the edge time counters 34_1 to 34_16, counter values E_CTR are reset at timing in synchronization with the vertical synchronization signal V_SYNC, and values CNTn immediately before the resetting are retrieved by the register of the counter value sort unit 41 in the boundary determination circuit 4, which will be explained later on.

The counter values E_CTR of the edge time counters 34_1 to 34_16 are retrieved by the register of the counter value sort unit 41 in an order that the edge time counters 34_1 to 34_16 retrieved the signal S24 as the edge detection result. Accordingly, when assuming that the signal S24 as the edge detection result is retrieved in an order of, for example, the edge time counter 34_1 → 34_2 → ..., their counter values are retrieved to the counter value sort unit 41 of the boundary determination circuit 4 in an order of S34_1 → S34_2 → ...

Next, an operation of the boundary determination circuit 4 will be explained with reference to FIG. 3.

In the counter value sort unit 41, as explained above, the counter values of the edge time counters 34_1 to 34_16 in the edge count circuit 3 are retrieved at timing in synchronization with a vertical synchronization signal of the screen and rearranged in an ascending order based on the counter values.

At that time, the respective counted values are retrieved to the counter value sort unit 41 in an order that the edge time counters 34_1 to 34_16 retrieved the signal S24 as the edge detection result, that is, in an order of switching by the counter switch 32. Furthermore, the counter value sort unit 41 rearranges respective counter values of the edge time counters 34_1 to 34_16 in an ascending order.

The rearranged counter value result is output to the block boundary determination unit 42 for a block boundary evaluation.

In the block boundary determination unit 42, the counter values set to the register and rearranged in the counter value sort unit 41 are evaluated to determine whether a block boundary is included between luminance signals in an amount of 16 pixels. By evaluating the luminance signals in an amount of 16 pixels, a block distortion normally arises in every 8 pixels can be surely detected without an error.

For example, when a vertical line, such as a column, exists on a screen, the possibility of erroneous detection can be prevented as a result that only one counter value, so that performance of the block boundary detection can be improved. Also, there is an advantage of being able to deal with a block distortion arising in every 16 pixels easily when composed by 16 edge time counters.

The block boundary determination unit 42 determines that a block boundary is detected when the three conditions below are satisfied.

Condition 4: A difference is 8 in the order of retrieving counters having the largest and the second largest counter values by the counter value sort unit 41.

Condition 5: The second largest counter value is not less than the threshold D.

Condition 6: A ratio of the second largest counter value to the third largest counter value is not less than a predetermined ratio threshold E.

The above condition 4 takes consideration that a block distortion arises in every 8 pixels in the case of a general MPEG2 signal, etc. For example, the counter switch 32 is switched by the horizontal position setting counter 31 at timing in synchronization with a horizontal synchronization signal of an image, so that an output value of the edge detection result is counted by the edge time counters 34_1 to 34_16 in an order of 34_1 → 34_2 → ... Since a counter value of the horizontal position setting counter 31 corresponds to a horizontal position on the screen, in the case where a block distortion arises in every 8 pixels, for example when the counter value of the edge time counters 34_1 is a large number, the edge time counter 34_9 for counting an edge at a position shifted by an amount of 8 pixels on the horizontal position also has a large counter value.

Accordingly, it is possible to determine a block distortion when a difference is 8 in the order that the counter value sort unit 41 retrieves the counters having the largest counter value and the second largest counter value rearranged in the register.

Also, in the case of a general block distortion, as explained above, it arises in 8 pixels, therefore, the second largest counter value also becomes large than a predetermined value.

Accordingly, by providing the above condition 5, when an image including a vertical line, such as a column, and a pulsing noise are reflected to the counter value, only the largest counter value is a large value and the second largest counter value is not large, so that they can be taken out and the possibility of erroneously detecting a block distortion can be reduced.

Furthermore, as indicated in the above condition 1, the edge determination circuit 24 performs edge detection by focusing on a relatively flat part of the image, the largest and the second largest counter values are preeminent when a block distortion is detected and the third largest counter value and on become smaller comparing with them. In other cases, it is considered that a noise other than a clock distortion is counted and a block distortion may be erroneously detected.

Accordingly, when a ratio of the second largest counter value to the third largest counter value is a predetermined ratio or larger, a block distortion is to be detected. Namely, by adding the above condition 6, the possibility of erroneous detection can be reduced.

Note that, even when not all of the above conditions 4 to 6 are applied, the erroneous detection reduction effect of a block distortion is maintained to a certain extent. For example, even when only the condition 4 is applied, the effect of detecting block distortions arising in every 8 pixels is obtained and the possibility of erroneous detection of a block distortion becomes relatively low.

Note that it is preferable that the threshold D and the threshold E in the above conditions 5 and 6 can be set from the outside because the optimal values vary more or less due to the system configuration as same as the thresholds A to C explained above.

In the block boundary determination unit 42, based on the above three conditions 4 to 6, counter values of the edge time counters 34_1 to 34_16 are evaluated at timing of a vertical synchronization signal, and it is determined as a block boundary when the all three conditions are satisfied. The determination result is output to the time integration unit 43. For example, "1" may be output when it is determined to be a block distortion, while "0" in other cases in the same way as in the output signal S24 as an edge detection result.

When it is determined to be a block boundary, the block boundary determination unit 42 also outputs to the time integration unit 43 information on the block boundary position indicating that the block boundary is between which luminance signals. As explained above, the horizontal position corresponds to the order of counter values of the edge time counters 34_1 to 34_16 retrieved by the counter value sort unit 41, so that each counter value can be made sequentially associated with the horizontal position.

In the time integration unit 43, when a block boundary is detected in the block boundary determination unit 42, time integration is furthermore performed for certain time based on the detection result.

When a block boundary position for each field as information from the block boundary determination unit 42 indicates the same block boundary position for a predetermined time, for example from 2 fields to 4 fields, the time integration determines the position as the block boundary position. Namely, assurance of the block boundary position is improved by performing the time integration.

The time integration unit 43 outputs to the filter 5 information on the identified block boundary position and filtering ON/OFF.

In the filter 5, filtering processing to reduce block distortion is performed only on around a luminance signal having a block distortion. As a result, quality of the image can be improved. Note that well known existing techniques can be applied.

As explained in the operation of the block distortion detection apparatus 1 above, the block distortion detection apparatus 1 is provided with an edge detection circuit 2, an edge count circuit 3, a boundary determination circuit 4 and a filter 5, wherein the edge detection circuit 2 detects an edge based on a luminance signal difference in units of pixels. The edge count circuit 3 is provided with 16 counters, wherein the sixteen counters count detected edges at timing in synchronization with a horizontal synchronization signal of an image for each field in the image. In the boundary determination circuit 4, a block boundary is determined in accordance with the counting result, a block boundary position is determined by time integration of the determination result, and filtering processing is performed on a luminance signal in units of pixels at the determined block boundary position; so that the block distortion is reduced.

Note that the present invention is not limited to the explanation on the embodiments above and may be variously modified within the scope of the present invention.

In the above embodiments, a difference of input successive eight luminance signals was held in the computing unit 23_1 and delay circuits 23_2 to 23_7 in the edge detection circuit 2, but the number is not limited to eight and it may be configured to store the difference of the larger number, for example, successive sixteen of luminance signals.

When the luminance signals are input by an odd number, a difference to be stored becomes an even number and there are two luminance difference values to be focused as the middle value, so that one number is not determined but there arises no problem if which should be used is set in advance.

Also, when the computing unit 23_1 and the delay circuit group are configured as such, it is needless to mention but the conditions 1 to 3, thresholds A to C and coefficient A for determination in the edge determination circuit 24 have to be reset based on the same concept.

Also, in the above embodiments, the edge time counters 34_1 to 34_16 are composed of sixteen counters, but the number is not limited to 16 as far as it is larger than 16 and multiples of 8. For example, when being composed of 24 edge counters, the determination conditions (the conditions 4 to 6) in the block boundary determination unit 42 may be set so as to furthermore reduce erroneous detection. Namely, even when there are two vertical lines in every 8 pixels, erroneous detection is not caused. In that case, it should be changed to evaluate the larger three counter values in the condition 4.

When the edge time counter is composed, for example, of 24 counters, a change has to be naturally made on the horizontal position setting counter 31 in accordance therewith from 4 bits to 5 bits, etc.

In the above embodiments, the case of a luminance signal including a block distortion arising in every eight pixels was explained, but the number is not limited to 8 and the case with block distortions arising, for example, in 16 pixels may be also applied.

In that case, when assuming that the edge time counter 32 of the edge count circuit 3 is composed of counters by the number of 32 multiplied by an even number and the horizontal position setting counter 31 is, for example, a 6-bit counter, it becomes possible to detect an edge arising in every 16 pixels by the edge time counter.

Also, in the above embodiments, the horizontal position setting counter 31 of the edge count circuit 3 counts up in accordance with a timing of the pixel sampling clock, but the method is not limited to the counting-up way and the counting-down way from a predetermined initial value may be applied.

In that case, the determination conditions (conditions 4 to 6) in the block boundary determination unit 42 become as conditions 4' to 6' below.

Condition 4': A difference is 8 in the order of retrieving counters with the smallest and the second smallest counter values by the counter value sort unit 41.

Condition 5' : The second smallest counter value is not larger than the threshold D.

Condition 6': When comparing the second smallest counter value and the third smallest counter value, it is not larger than a predetermined ratio threshold E.

Second Embodiment

Next, an embodiment of a video signal processing apparatus of the present invention will be explained.

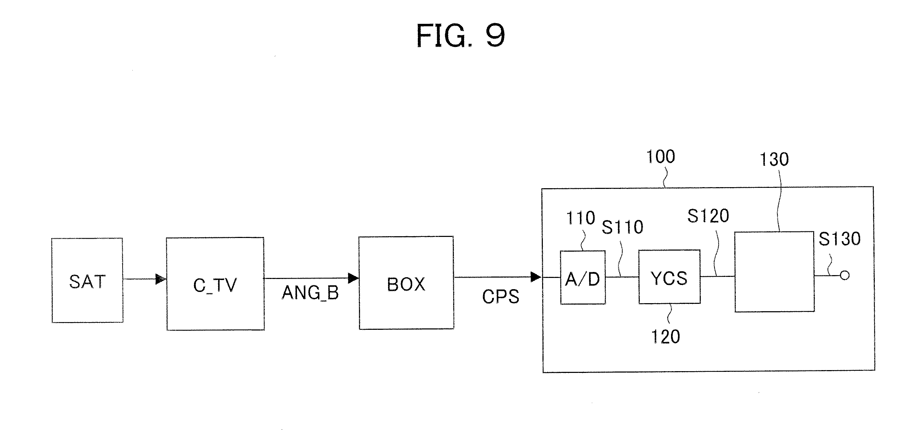

FIG. 9 is a block diagram of a video signal processing apparatus according to the second embodiment.

As shown in FIG. 9, in the second embodiment, a video signal is distributed from a satellite broadcast (SAT) to, for example, to cable television (C_TV) and analogue broadcast (ANG_B) from the cable television (C_TV) is received by a video signal processing apparatus 100, such as a TV set, via a set-top box (BOX).

Here, the video signal distributed from the satellite broadcast SAT includes a block distortion due to block encoding of MPEG. Since a video digital signal including the block distortion is converted to analog by the cable television C_TV, information on block distortion boundary is lost.

The video signal processing apparatus 100 receives such an analog video signal including a block distortion in a form of an analog composite signal (CPS) and performs processing.

As shown in FIG. 9, the video signal processing apparatus 100 in the second embodiment includes an A/D converter (A/D) 110, a YC separator (YCS) 120 and a block distortion detection unit 130.

Below, an operation of the video signal processing apparatus 100 will be explained based on FIG. 9.

The A/D converter 110 receives as an input an analog composite signal (CPS) including a block distortion, performs A/D conversion and supplies a digital signal S110 to the YC separator 120.

The YC separator 120 receives as an input a digital composite signal S110 and performs YC separation. A separated video luminance signal is supplied as a signal S120 to the block distortion detection unit 130.

In the A/D converter 110 and YC separator 120, a block distortion is not removed from the analog composite signal (CPS) input to the video signal processing apparatus 100.

The block distortion detection unit 130 receives as an input the video luminance signal S120 separated in the YC separator 120, detects a block distortion, and performs filtering processing on the input video luminance signal in accordance with the detected block distortion.

The configuration and operation of the block distortion detection unit 130 are the same as those in the block distortion detection apparatus 1 explained in the first embodiment. Accordingly, the block distortion included in the analog video signal input to the video signal processing apparatus 100 is reduced.

Third Embodiment

Next, a video signal processing apparatus according to a third embodiment will be explained.

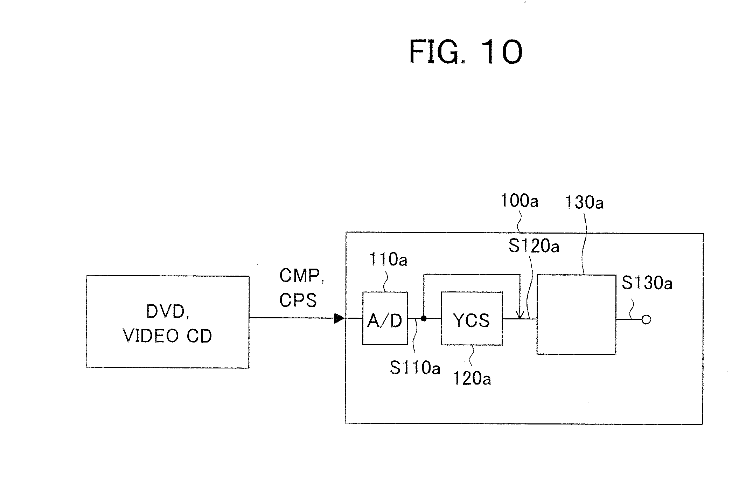

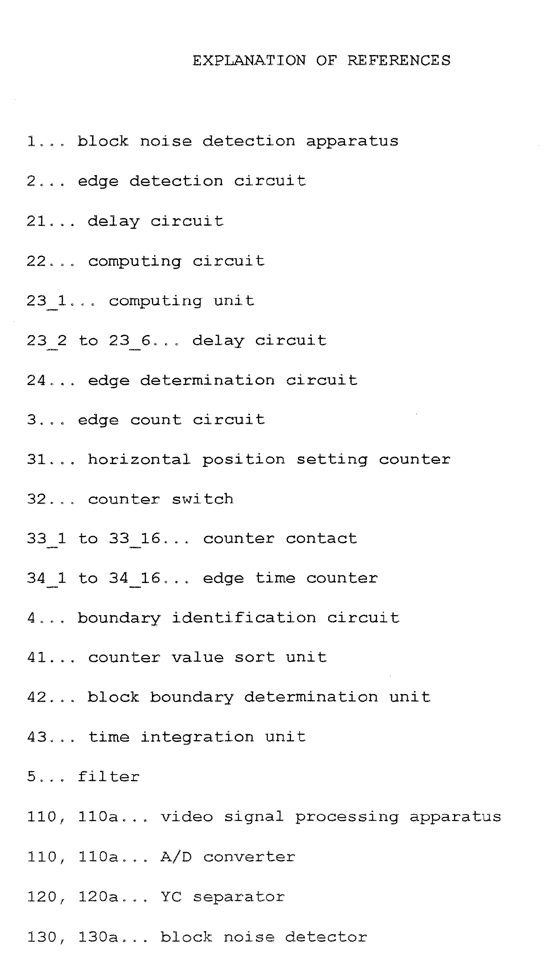

FIG. 10 is a block diagram of a video signal processing apparatus according to the third embodiment. As shown in FIG. 10, in the third embodiment, a video signal processing apparatus, such as a TV set, receives a video signal of, for example, a DVD player and a video CD as an analog component signal CMP or an analog composite signal CPS.

Here, the video signal from a DVD player or video composite is an analog composite signal CPS or analog component signal (CMP) including a block distortion due to block encoding of MPEG, wherein information on the block boundary is already lost.

As shown in FIG. 10, the video signal processing apparatus 100a in the third embodiment includes an A/D converter (A/D) 110a, a YC separator (YCS) 120a and a block distortion detection 130a.

The respective components of the video signal processing apparatus 100a correspond to the A/D converter (A/D) 110, YC separator (YCS) 120 and block distortion detection 130, and the operations are same, thus the block distortion included in the analog video signal input to the video signal processing apparatus 100a is reduced.

Note that in the operation of the video signal processing apparatus 100a, it is needles to mention but YC separation by the YC separator 120a is not performed when the input signal is an analog component signal CMP.

As explained above, the video signal processing apparatuses according to the second and third embodiments receive analog video data including a block distortion and detect the block distortion based on a video luminance signal subjected to A/D conversion and, furthermore, in accordance with need, a video luminance signal obtained from the YC separator.

The configuration and operations of the block distortion detection units 130 and 130a are the same as those in the block distortion detection apparatus 1 according to the first embodiment. As a result, high quality image, wherein erroneous determination of a block boundary position is reduced, can be obtained.

Industrial Applicability

The present invention can be applied to a video reproducing apparatus for reproducing block encoded image data, etc.

**Claims**

1. A block distortion detection apparatus for detecting a block distortion occurred during block encoding of an image, comprising:

   an edge detection means for detecting an existence of an edge in each of a plurality of pixel signals based on differences of each of successive pixel signals;
   an edge count means including a plurality of counters, a number of which is determined in response to a number of pixels included in a block, for successively accepting and counting edge detection results of said edge detection means respectively by said plurality of counters at first timing, which is synchronized with a horizontal synchronization signal; and
   a block boundary identification means for successively retrieving counter values of said plurality of counters at second timing, which is synchronized with a vertical synchronization signal, and for identifying a block boundary based on the counter values of the counters and an order of retrieving the edge detection results by the respective counters.

2. A block distortion detection apparatus as set forth in claim 1, wherein said edge count means resets the counters at said second timing.

3. A block distortion detection apparatus as set forth in claim 2, wherein:

said edge detection means successively retrieves pixel signals for successive "n" times (n: an integer) and successively calculates (n-1) number of difference absolute values of adjacent pixel signals; and when assuming that a difference absolute value positioned at the center as a focused difference absolute value among said (n-1) number of difference absolute values; when difference absolute values except for said focused different absolute value are not larger than a predetermined value, and said focused difference absolute value is a predetermined multiple of an average of the difference absolute values except for said focused different absolute value or larger, an existence of an edge existing between pixel signals having said focused difference absolute value is detected.

4. A block distortion detection apparatus as set forth in claim 2, wherein:

said edge detection means successively retrieves pixel signals for successive "n" times (n: an integer) and successively calculates (n-1) number of difference absolute values of adjacent pixel signals; and when assuming that a difference absolute value positioned at the center as a focused difference absolute value among said (n-1) number of difference absolute values, and when said focused different absolute value is a value within a predetermined range an existence of an edge existing between pixel signals having said focused difference absolute value is detected.

5. A block distortion detection apparatus as set forth in claim 2, wherein:

said edge detection means successively retrieves pixel signals for successive "n" times (n: an integer) and successively calculates (n-1) number of difference absolute values of adjacent pixel signals; and when assuming that a difference absolute value positioned at the center as a focused difference absolute value among said (n-1) number of difference absolute values; when difference absolute values except for said focused different absolute value are not larger than a predetermined value, said focused difference absolute value is a predetermined multiple of an average of the difference absolute values except for said focused different absolute value or larger, and said focused different absolute value is a value within a predetermined range, an existence of an edge existing between pixel signals having said focused difference absolute value is detected.

6. A block distortion detection apparatus as set forth in claim 2, wherein the number of the plurality of counters of said edge count means is a multiple of "N" when said block encoding is performed in units of blocks in N pixels by N pixels.

7. A block distortion detection apparatus as set forth in claim 6, wherein:

said block boundary identification means retrieves counter values of respective counters by following a retrieving order of said plurality of counters and rearranges the counter values in an ascending order; and when each of said counters counts up when an edge exists, and a difference of retrieving orders is "N" in two counters having the largest and second largest counter values, a horizontal position corresponding to said two counters is identified as a block boundary position.

8. A block distortion detection apparatus as set forth in claim 6, wherein:

said block boundary identification means retrieves counter values of respective counters by following a retrieving order of said plurality of counters and rearranges the counter values in an ascending order; and when each of said counters counts down when an edge exists, and a difference of retrieving orders is "N" in two counters having the smallest and second smallest counter values, a horizontal position corresponding to said two counters is identified as a block boundary position.

9. A block distortion detection apparatus as set forth in claim 6, wherein:

said block boundary identification means retrieves counter values of respective counters by following a retrieving order of said plurality of counters and rearranges the counter values in an ascending order; and when each of said counters counts up when an edge exists,

a difference of retrieving orders is "N" in two counters having the largest and second largest counter values, and the second largest counter value is a predetermined value or larger, a horizontal position corresponding to said two counters is identified as a block boundary position.

10. A block distortion detection apparatus as set forth in claim 6, wherein:

said block boundary identification means retrieves counter values of respective counters by following a retrieving order of said plurality of counters and rearranges the counter values in an ascending order; and when each of said counters counts down when an edge exists, a difference of retrieving orders is "N" in two counters having the smallest and second smallest counter values, and the second smallest counter value is a predetermined value or smaller, a horizontal position corresponding to said two counters is identified as a block boundary position.

11. A block distortion detection apparatus as set forth in claim 6, wherein:

said block boundary identification means retrieves counter values of respective counters by following a retrieving order of said plurality of counters and rearranges the counter values in an ascending order; and when each of said counters counts up when an edge exists, a difference of retrieving orders is "N" in two counters having the largest and second largest counter values, and the second largest counter value is a predetermined multiple of the third largest counter value, a horizontal position corresponding to said two counters is identified as a block boundary position.

12. A block distortion detection apparatus as set forth in claim 6, wherein:

said block boundary identification means retrieves counter values of respective counters by following a retrieving order of said plurality of counters and rearranges the counter values in an ascending order; and when each of said counters counts down when an edge exists, a difference of retrieving orders is "N" in two counters having the smallest and second smallest counter values, and the second smallest counter value is a predetermined multiple of the third smallest counter value, a horizontal position corresponding to said two counters is identified as a block boundary position.

13. A block distortion detection apparatus as set forth in claim 6, wherein:

said block boundary identification means retrieves counter values of respective counters by following a retrieving order of said plurality of counters and rearranges the counter values in an ascending order; and when each of said counters counts up when an edge exists, a difference of retrieving orders is "N" in two counters having the largest and second largest counter values, the second largest counter value is a predetermined value or larger, and the second largest counter value is a predetermined multiple of the third largest counter value, a horizontal position corresponding to said two counters is identified as a block boundary position.

14. A block distortion detection apparatus as set forth in claim 6, wherein:

said block boundary identification means retrieves counter values of respective counters by following a retrieving order of said plurality of counters and rearranges the counter values in an ascending order; and when each of said counters counts down when an edge exists, a difference of retrieving orders is "N" in two counters having the smallest and second smallest counter values, the second smallest counter value is a predetermined value or smaller, and the second smallest counter value is a predetermined multiple of the third smallest counter value, a horizontal position corresponding to said two counters is identified as a block boundary position.

15. A block distortion detection method for detecting a block distortion due to block encoding of an image, including the steps of:

detecting an existence of an edge in each of a plurality of pixel signals based on differences of said plurality of successive pixel signals;

successively retrieving edge detection results of said edge determination means respectively by a plurality of counters in accordance with the number of pixels included in a block at first timing in synchronization with a horizontal synchronization signal and counting; and

successively retrieving counter values of said plurality of counters at second timing in synchronization with a vertical synchronization signal and identifying as a block boundary based on an order of retrieving the edge detection results by the counters and a counter value of the counters.

16. A block distortion detection method for detecting a block distortion due to block encoding of an image, comprising:

an edge detection means for detecting an existence of an edge in each of a plurality of pixel signals based on differences of said plurality of successive pixel signals;

an edge count means including a plurality of counters in accordance with the number of pixels included in a block, for successively retrieving edge detection results of said edge determination means respectively by said plurality of counters at first timing in synchronization with a horizontal synchronization signal and counting;

a block boundary identification means for successively retrieving counter values of said plurality of counters at second timing in synchronization with a vertical synchronization signal and identifying as a block boundary based on an order of retrieving the edge detection results by the counters and a counter value of the counters; and

a filtering means for performing filtering processing on the pixel signals at the block boundary position specified by said block boundary identification means.

# FIG. 1

# FIG. 2

FIG. 3

FIG. 4

FIG. 5

FIG. 6

FIG. 7A CLK

FIG. 7B H_SYNC

FIG. 7C H_CTR

| CNT 0 | CNT 1 | CNT 2 | CNT 3 | CNT 4 | CNT 5 | CNT 6 |
|---|---|---|---|---|---|---|

FIG. 8A CLK

FIG. 8B V_SYNC

FIG. 8C E_CTR

| CNT n | 0 |
|---|---|

FIG. 8D SORT_R

| CNT n |
|---|

# FIG. 9

EP 1 641 270 A1

```
SAT → C_TV --ANG_B--> BOX --CPS--> [100] [110 S110] A/D --> YCS S120 --> [130] --> S130
                                         120
```

# FIG. 10

EXPLANATION OF REFERENCES

1... block noise detection apparatus

2... edge detection circuit

21... delay circuit

22... computing circuit

23_1... computing unit

23_2 to 23_6... delay circuit

24... edge determination circuit

3... edge count circuit

31... horizontal position setting counter

32... counter switch

33_1 to 33_16... counter contact

34_1 to 34_16... edge time counter

4... boundary identification circuit

41... counter value sort unit

42... block boundary determination unit

43... time integration unit

5... filter

110, 110a... video signal processing apparatus

110, 110a... A/D converter

120, 120a... YC separator

130, 130a... block noise detector

## INTERNATIONAL SEARCH REPORT

| | International application No. |
| --- | --- |
| | PCT/JP2004/009460 |

| A. CLASSIFICATION OF SUBJECT MATTER |
| --- |
| Int.Cl$^7$ H04N7/24, H04N1/41 |
| |
| According to International Patent Classification (IPC) or to both national classification and IPC |

| B. FIELDS SEARCHED |
| --- |
| Minimum documentation searched (classification system followed by classification symbols) |
| Int.Cl$^7$ H04N7/24-7/68, H04N1/41-1/419 |
| |

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2002-344968 A (Matsushita Electric Industrial Co., Ltd.), 29 November, 2002 (29.11.02), Full text; Figs. 1 to 7 (Family: none) | 1-16 |
| A | JP 2000-350202 A (Victor Company Of Japan, Ltd.), 15 December, 2000 (15.12.00), Full text; Figs. 1 to 6 & EP 1039760 A2    & CN 1268842 A | 1-16 |

| ☐ Further documents are listed in the continuation of Box C. | ☐ See patent family annex. |
| --- | --- |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 September, 2004 (28.09.04) | 19 October, 2004 (19.10.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)